# EUROPÄISCHE PATENTSCHRIFT

(11) **EP 2 322 870 B1**
(45) Veröffentlichungstag und Bekanntmachung des Hinweises auf die Patenterteilung: **09.10.2013**
(21) Anmeldenummer: 09175696.5
(22) Anmeldetag: 11.11.2009
(51) Int. Cl.: F24H 8/00, F24H 1/00

(54) **Brennwert-Heizgerät**
Condensing boiler
Chaudière à condensation

(43) Veröffentlichungstag der Anmeldung: 18.05.2011
(73) Patentinhaber: Wunsch, Horst, 8597 Landschlacht (CH)
(72) Erfinder: Wunsch, Horst, 8597 Landschlacht (CH)
(74) Vertreter: Wunsch, Alexander

(56) Entgegenhaltungen:
- DE-A1- 10 236 961
- US-A- 4 793 800
- US-A- 5 311 843

## Beschreibung

### 1. Gebiet der Erfindung

Die vorliegende Erfindung betrifft ein Brennwert-Heizgerät mit einer besonderen Führung der Verbrennungsluft innerhalb des Geräts und einer fallenden gemeinsamen Abgas- und Kondensatabführung in die Steigleitung eines Kamins eines Gebäudes.

### 2. Stand der Technik

Brennwert-Heizgeräte sind aus Stand der Technik bekannt und für Öl und Gas verfügbar. Üblicherweise sind derartige Brennwert-Heizgeräte wandhängend montiert und weisen an ihrem oberen Ende einen Auslass für das Abgas auf, der über eine steigende Leitung zu der Steigleitung eines Kamins führt. Das bei der Brennwerttechnik anfallende Kondensat wird in einer Kondensatwanne gesammelt und über einen Siphon und eine Kondensatleitung einer Neutralisation zugeführt.

Aus der DE 42 37 134 Al ist eine Einrichtung mit einem Abgasrohr bekannt, bei der mehrere Brennwert-Heizgeräte an einem gemeinsamen, mehrere Geschosse eines Gebäudes durchsetzenden Abgasrohr angeschlossen sind (Kaskade). Hierbei werden ausschließlich die Abgase der Brennwert-Heizgeräte in die Steigleitung des Kamins eingeleitet. Das Kondensat jedes Brennwert-Heizgerätes wird über einen Siphon in ein gemeinsames Fallrohr eingeleitet und einer Neutralisation zugeführt.

Auch aus der US 5,311,843 ist ein Heizgerät bekannt, bei dem die Abgase in eine Steigleitung eines Kamins gerührt werden und das Kondensat separat in einer Kondensatwanne gesammelt wird.

Dieses Dokument offenbart den Oberbegriff der Ansprüche 1 und 8.

In der DE 10 2005 003 868 A1 wird vorgeschlagen, das abzuführende Kondensat mittels einer Kondensatpumpe auf ein gewünschtes Niveau oberhalb des Gerätes zu heben und in die Abgasleitung zwischen Brennwert-Heizgerät und Steigleitung des Kamins einzuleiten.

Der Nachteil dieser obigen Lösungen besteht bezüglich ihrer Abgas- und Kondensatabführung darin, dass entweder eine separate Zuführung für das Kondensat zur Steigleitung des Kamins vorgesehen sein muss oder alternativ eine Kondensatpumpe vorgesehen sein muss, die das Kondensat, welches sich schwerkraftbedingt in der Kondensatwanne ansammelt, zur Abgasleitung zugeführt werden muss, die oben aus dem Brennwert-Heizgerät austritt. Da das Kondensat hauptsächlich aus schwefeliger Säure und Schwefelsäure besteht, sind die Kondensatpumpen säurefest auszubilden und daher vergleichsweise teuer und wartungsanfällig.

Weiterhin sind derartige wandhängende Brennwert-Heizgeräte schwer zu installieren, da mehrere Anschlüsse an den Kamin und für neutralisiertes Kondensat an das Abwassersystem vorgesehen werden müssen. Auch ist für den Kaminkehrer der Zugang zur Revisionsöffnung des Kamins mühsam, da der über dem Gerät befindliche Kaminanschluss nur über Leitern etc. erreichbar ist.

Brennwert-Heizgeräte nach dem Stand der Technik beziehen ihre Verbrennungsluft über die Oberseite ihres Gehäuses entweder raumluftabhängig aus der Umgebung oder - energetisch günstiger - raumluftunabhängig über den Kamin des Gebäudes. Hier wird die Verbrennungsluft in der Regel in einem Ringspalt um das Abgasrohr im Kamin angesaugt und dabei von den warmen Abgasen vorgewärmt. Vom Kamin wird die Verbrennungsluft an die Oberseite des Gehäuses des Brennwert-Heizgeräts geleitet.

Die Zuführung der Verbrennungsluft zur Brennkammer des Heizkessels erfolgt über einen Ventilator, an den ein Zuluftrohr angeschlossen ist. Dieses Zuluftrohr saugt die Verbrennungsluft im unteren Bereich des Gehäuses an, so dass sie im Gehäuse von oben nach unten strömt, an den warmen Komponenten des Brennwert-Heizgeräts vorbeistreicht und dadurch vorgewärmt wird. Dann leitet das Zuluftrohr die vorgewärmte Luft innerhalb des Geräts wieder nach oben, wo sie mittels eines Ventilators in die Brennkammer des Heizkessels eingeblasen wird. Das Zuluftrohr weist oft mehrere Knicke und Biegungen auf und behindert dadurch die Strömung der Verbrennungsluft.

Diese Brennwert-Heizgeräte weisen daher bezüglich ihrer Verbrennungsluftführung den Nachteil auf, dass das Zuluftrohr voluminös ist und viel Raum im Gehäuse einnimmt. Weiterhin ergibt sich durch die Führung und Umlenkung der Verbrennungsluft im Zuluftrohr ein Druckverlust, der von dem Ventilator kompensiert werden muss. Schließlich verläuft die Strömung der sich erwärmenden Verbrennungsluft von oben nach unten, also entgegen der Thermik, so dass auch hierfür die Leistung des Ventilators entsprechend hoch ausgelegt sein muss.

Es ist daher die Aufgabe der vorliegenden Erfindung ein Brennwert-Heizgerät bereitzustellen, welches die oben genannten Nachteile nicht mehr aufweist und insbesondere eine verbesserte Verbrennungsluftführung aufweist. Weiterhin soll das Brennwert-Heizgerät kostengünstiger ausgeführt werden und die Montage, Wartung und Servicefreundlichkeit des Brennwert-Heizgerätes soll erhöht werden.

### 3. Zusammenfassung der Erfindung

Die oben genannten Aufgaben werden gelöst durch ein Brennwert-Heizgerät gemäß Anspruch 1 sowie ein Verfahren zum Betrieb eines Brennwert-Heizgeräts gemäß Anspruch 8. Vorteilhafte Weiterbildungen der beanspruchten Erfindung finden sich in den Unteransprüchen.

Insbesondere werden die oben genannten Aufgaben gelöst durch ein Brennwert-Heizgerät, aufweisend ein Gehäuse, welches in seinem oberen Bereich geschlossen ist und welches in seinem unteren Bereich einen Einlass für Verbrennungsluft aufweist und einen Ventilator zur Zufuhr von Verbrennungsluft zu einem Heizkessel, wobei der Ventilator die Verbrennungsluft im oberen Bereich des Gehäuses ansaugt und das Gehäuse in seinem unteren Bereich einen gemeinsamen Auslass für Abgase und anfallendes Kondensat aufweist, und wobei das Brennwert-Heizgerät weiterhin eine Kondensatwanne mit einem nach unten mündenden Stutzen aufweist, wobei der Stutzen gleichzeitig Auslass für anfallendes Kondensat als auch Auslass für Abgase aus dem Brennwert-Heizgerät ist.

Dadurch, dass anfallendes Kondensat und Abgase durch einen gemeinsamen Auslass nach unten aus dem Brennwert-Heizgerät herausgeführt werden, kann sowohl auf einen Siphon als auch auf eine Kondensatpumpe im Gerät verzichtet werden. Abgas und Kondensat können über die gemeinsame, fallend angeordnete Rohrleitung der Steigleitung eines entsprechenden Kamins eines Gebäudes zugeführt werden. Das Kondensat läuft dabei schwerkraftbedingt durch die fallend angeordnet Rohrleitung in die Steigleitung des Kamins, wodurch es zusammen mit dem im Kamin anfallenden Kondensat und dem Kondensat weiterer Brennwert-Heizgeräte einer gemeinsamen Neutralisation zugeführt wird.

Da dem Heizkessel die Verbrennungsluft mittels eines Ventilators zugeführt wird, entsteht in dem Heizkessel ein Überdruck an Verbrennungsgas, welches ebenfalls durch die fallend angeordnete Rohrleitung in den Kamin geblasen wird. Eine steigende Zuführung bzw. eine Zuführung über das obere Ende des Brennwert-Heizgerätes - die bei älteren Anlagen für einen thermischen Auftrieb (Zug) notwendig war - ist nicht mehr notwendig. Somit kann für Abgas und Kondensat die gleiche Rohrleitung zum Kamin verwendet werden.

Das Brennwert-Heizgerät kann dadurch sehr kostengünstig ausgeführt werden und weist auch weitere technische Vorteile auf. Durch den Wegfall des Siphons kann dieser nicht trocken fallen, genauso wenig kann eine Kondensatpumpe durch das sauere Kondensat zerstört werden. Am Kamin muss lediglich ein einziger Anschluss vorhanden sein. Ein Anschluss für Abwasser, oder gar eine eigene Leitung für Kondensat kann eingespart werden.

Weiterhin ergibt sich insbesondere bei wandhängenden Geräten der Vorteil, dass die Rohrleitung zwischen Brennwert-Heizgerät und Kamin an der Unterseite des Geräts austritt und damit sehr leicht zugänglich ist. Dadurch werden Prüf- und Revisionsvorgänge sehr erleichtert und das Brennwert-Heizgerät kann beispielsweise in einen Unterschrank einer Küche - ggf. neben einem Gasherd - eingebaut werden. Eine solche niedrige Einbauhöhe erhöht auch die Sicherheit im Brandfall, da bei einem Brand auf Bodenhöhe wesentlich niedrigere Temperaturen vorherrschen als im oberen Bereich des Raumes.

Weiterhin wird eine interne Abgasführung, die bei Brennwert-Heizgeräten nach dem Stand der Technik von der Kondensatwanne nach oben führt, ebenfalls eingespart. Insgesamt kann damit das Brennwert-Heizgerät damit kleiner ausgeführt werden oder bei gleicher Größe kann es für eine höhere Leistung ausgelegt werden. Damit kann das Brennwert-Heizgerät auch besser in Möbel, wie beispielsweise Küchenschränke oder Dielenschränke, integriert werden.

Durch die gemeinsame Nutzung des Steigrohrs im Kamin zur Kondensatabführung bei mehreren an den Kamin angeschlossenen Brennwert-Heizgeräten braucht das gesamte System lediglich einen Siphon am Kaminsockel zum Auffangen des Kondensats und zum Weiterleiten an eine Neutralisationsbox. Ein gemeinsamer Siphon fällt weniger schnell trocken als ein Siphon an jedem Brennwert-Heizgerät, da insgesamt mehr Kondensat anfällt. In das Kaminrohr eindringender Regen und Schnee hilft ebenfalls ein Trockenfallen des Siphons zu vermeiden. Bezüglich der Zuführung an Verbrennungsluft kann auf ein Zuluftrohr, das im Stand der Technik im Gehäuse von unten nach oben verläuft, verzichtet werden. Da der Einlass der frischen Verbrennungsluft erfindungsgemäß von unten erfolgt, strömt sie im Gehäuse nach oben, an den warmen Komponenten des Brennwert-Heizgeräts vorbei und wird dabei aufgeheizt. Dann wird sie oben im Gehäuse von dem Ventilator angesaugt und in die Brennkammer eingeblasen. Der Ventilator befindet sich im Regelfall im oberen Bereich des Gehäuses. Der Wegfall des Zuluftrohrs verringert den Druckverlust beim freien Durchströmen des Gehäuses auf ein Minimum. Dadurch kann entweder der Ventilator wesentlich leistungsschwächer ausgelegt werden als im Stand der Technik, oder es werden - bei gleicher Leistung - höhere Abgasdrücke erreicht. Die Strömung der sich erwärmenden Verbrennungsluft wird zudem durch die Thermik unterstützt. Dabei können sich durch die Absaugung im oberen Bereich des Gehäuses im Gerät keine Wärmenester bilden und die Abwärme der inneren Komponenten des Brennwert-Heizgeräts wird optimal zur Vorwärmung der Verbrennungsluft genutzt.

Der Wegfall des Zuluftrohrs ermöglicht weiterhin eine kleinere Bauweise des Brennwert-Heizgeräts und eine Kostenreduktion.

Schließlich werden etwaige Undichtigkeiten des Abgassystems oder der Gaszufiihrung mit der Verbrennungsluft nach oben steigen und ebenfalls angesaugt werden, was eine verbesserte Sicherheit gewährleistet.

Selbst bei einer raumluftabhängigen Betriebsweise hat die erfindungsgemäße Lösung dem Vorteil, dass der Einlass der Verbrennungsluft sich im unteren Bereich des Gehäuses befindet, so dass es nicht in die Zuluftöffnung hineinstauben kann und somit der Brenner geschont wird.

In einer bevorzugten Ausführungsform weist das Brennwert-Heizgerät weiterhin einen an den Ventilator angebrachten Ansaugstutzen auf, wobei der Ansaugstutzen dem Ventilator die Verbrennungsluft aus dem oberen Bereich des Gehäuses zuführt. Zur Verbesserung der Ansaugposition kann an den Ventilator ein Ansaugstutzen angeschlossen sein, der die Verbrennungsluft vorteilhafterweise am oberen Ende des Gehäuses ansaugen kann.

Bevorzugt weist das Brennwert-Heizgerät weiterhin mindestens eine Rückstromsperre auf die eine Vermischung von Abgas und Verbrennungsluft bei abgeschaltetem Brennwert-Heizgerät verhindert. Die Rückstromsperre verhindert, dass Abgas von anderen, am gleichen Kaminrohr angeschlossenen Brennwert-Heizgeräten bei einem abgeschalteten Brennwert-Heizgerät aus der Öffnung für die Frischluftzufuhr austreten kann. Die Rückstromsperre ist bevorzugt vor oder nach dem Ventilator oder vor oder nach dem Ansaugstutzen angeordnet.

In einer bevorzugten Ausführungsform ist der Ansaugstutzen weiterhin als Schalldämpfer ausgebildet. Damit werden die Geräusche des Ventilators und die Geräusche eines Brenners vermindert.

In einer bevorzugten Ausführungsform tritt die Verbrennungsluft von unten in das Gehäuse ein, wird innerhalb des Gehäuses erwärmt und wird als erwärmte Verbrennungsluft einer Brennkammer des Heizkessels zugeführt.

Bevorzugt weist das Brennwert-Heizgerät weiterhin eine fallend angeordnete Rohrleitung auf, die an den Stutzen der Kondensatwanne angeschlossen ist, für die gemeinsame Abgas- und Kondensatführung vom Brennwert-Heizgerät zu einem Kamin eines Gebäudes.

Die oben genannten Aufgaben werden ebenfalls gelöst durch ein Verfahren zum Betrieb eines Brennwert-Heizgeräts, aufweisend die folgenden Schritte:
a) Eintreten von Verbrennungsluft in den unteren Bereich eines luftdichten Gehäuses des Brennwert-Heizgeräts;
b) Aufsteigen und Erwärmen der Verbrennungsluft an warmen Komponenten des Brennwert-Heizgeräts;
c) Ansaugen der erwärmten Verbrennungsluft im oberen Bereich des Gehäuses;
d) Zuführen der erwärmten Verbrennungsluft zur Brennkammer eines Heizkessels.
e) Abführen der Verbrennungsgase und des entstehenden Kondensats durch einen gemeinsamen Auslass im unteren Bereich des Gehäuses des Brennwert-Heizgeräts aus dem Gehäuse heraus, wobei das Brennwert-Heizgerät weiterhin eine Kondensatwanne mit einem nach unten mündenden Stutzen aufweist, wobei der Stutzen gleichzeitig Auslass für anfallendes Kondensat als auch Auslass für Abgase aus dem Brennwert-Heizgerät ist.

Hierdurch kann ebenfalls auf ein Zuluftrohr verzichtet werden und es ergeben sich die oben bereits genannten Vorteile insbesondere ein geringerer Druckverlust in der Verbrennungsluftzuführung und der Raum- und Kosteneinsparung. Da der Eintritt der frischen Verbrennungsluft erfindungsgemäß von unten erfolgt, strömt sie im Gehäuse frei nach oben, an den warmen Komponenten des Brennwert-Heizgeräts vorbei und wird dabei aufgeheizt. Dann wird sie oben im Gehäuse - bevorzugt von einem Ventilator - angesaugt und einer Brennkammer zur Verbrennung zugeführt. Dabei können sich durch die Absaugung im oberen Bereich des Gehäuses keine Wärmenester bilden und die Abwärme der inneren Komponenten des Brennwert-Heizgeräts wird optimal zur Vorwärmung der Verbrennungsluft genutzt.

Bevorzugt erfolgt das Zuführen der erwärmten Verbrennungsluft zur Brennkammer eines Heizkessels mittels eines Ventilators.

In einer weiteren bevorzugten Ausführungsform erfolgt das Ansaugen der erwärmten Verbrennungsluft zur Brennkammer eines Heizkessels mittels eines an den Ventilator angeschlossenen Ansaugstutzens.

### 4. Kurze Beschreibung der Zeichnungen

Im Folgenden werden bevorzugte Ausführungsformen der Erfindung mit Bezug auf die Figuren beschrieben. In denen zeigt:
- Fig. 1: ein Brennwert-Heizgerät gemäß dem Stand der Technik mit einer Verbrennungsluftzuführung von oben und einer Ansaugung der Verbrennungsluft aus dem unteren Bereich des Gehäuses;
- Fig. 2: die Strömung der Verbrennungsluft in einem Brennwert-Heizgerät gemäß Fig. 1;
- Fig. 3: ein erfindungsgemäßes Brennwert-Heizgerät mit einer Verbrennungsluftzuführung von unten und einer Ansaugung der Verbrennungsluft aus dem oberen Bereich des Gehäuses sowie einem gemeinsamen Auslass für Kondensat und Abgas; und
- Fig. 4: die Strömung der Verbrennungsluft in einem Brennwert-Heizgerät gemäß Fig. 3.

### 5. Beschreibung der bevorzugten Ausführungsformen

Im Folgenden werden bevorzugte Ausführungsformen der Erfindung mit Bezug auf die Figuren beschrieben.

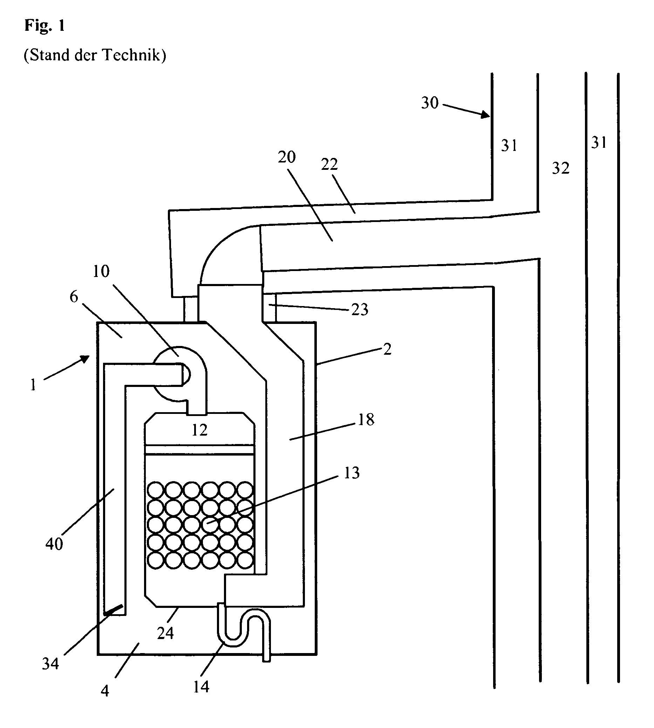

Fig. 1 zeigt ein Brennwert-Heizgerät 1 gemäß dem Stand der Technik. Das Brennwert-Heizgerät 1 nach dem Stand der Technik ist raumluftunabhängig und weist ein luftdichtes Gehäuse 2 sowie einen Ventilator 10 zur Zufuhr von Verbrennungsluft zu dem Heizkessel 12 auf. In dem Heizkessel 12 ist weiterhin ein Wärmetauscher 13 angeordnet, der dem Verbrennungsgas zusätzlich Wärme entzieht und der Heizung zur Verfügung stellt. Anfallendes Kondensat wird in einer Kondensatwanne 24 gesammelt und über einen Siphon 14 einer Kondensatleitung (nicht dargestellt) zugeführt, die zu einer Neutralisationsbox (nicht dargestellt) führt. In dieser Neutralisationsbox wird das saure Konzentrat mittels Kalkstein zu Gips und Wasser neutralisiert.

Die Abgase des Brennwert-Heizgeräts 1 nach dem Stand der Technik werden über eine interne Abgasführung 18 nach oben geführt und über ein steigend angeordnetes Rohr 20 einer Steigleitung 32 eines Kamins 30 zugeführt. Frischluft für die Verbrennung (im Folgenden als Verbrennungsluft bezeichnet) wird im Ringspalt 31 des Kamins angesaugt und durch die Restwärme des Abgases in der Steigleitung 32 vorgewärmt. Die Verbrennungsluft gelangt dann über einen Zuluftkanal 22 zu dem Brennwert-Heizgerät 1 wo sie, über einen Einlass 23 im oberen Bereich 6 des Gehäuses 2 in das Gehäuse 2 eintritt. Zur Verbrennung wird die Verbrennungsluft von dem Ventilator 10 über ein internes Zuluftrohr 40 im unteren Bereich 4 des Gehäuses 2 angesaugt und in den Heizkessel 12 eingeblasen.

Man erkennt aus dieser schematischen Darstellung eines Brennwert-Heizgerätes 1 gemäß dem Stand der Technik, dass es notwendig ist, für die Kondensatabfuhr und für die Abfuhr des Abgases unterschiedliche Leitungen zu verwenden. Weiterhin erkennt man, dass die Abgasleitung 20 und der Zuluftkanal 22 oberhalb des Gehäuses 2 liegen und damit für den Installateur und Kaminkehrer schlecht erreichbar sind und daher einen hohen Montageaufwand und Wartungsaufwand erfordern. Schließlich sieht man, dass eine interne Abgasführung 18 im Gehäuse 2 vorgesehen sein muss, um das Abgas nach oben aus dem Brennwert-Heizgerät 1 zu leiten. Weiterhin erkennt man, dass ein Zuluftrohr 40 für die Ansaugung warmer Verbrennungsluft am Bodenbereich des Gehäuses 2 vorgesehen ist, das signifikant Raum innerhalb des Gehäuses 2 einnimmt.

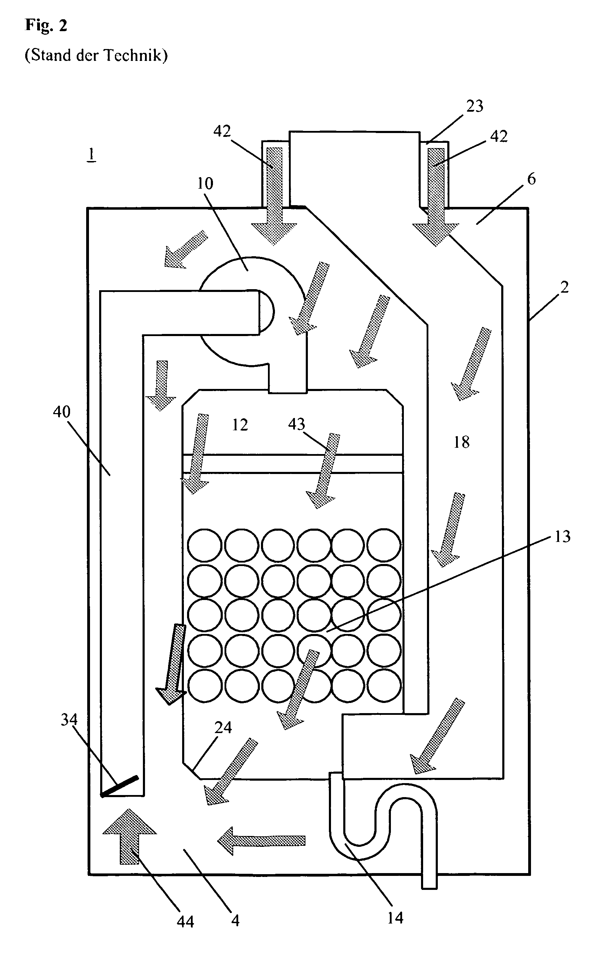

Die sich in einem Brennwert-Heizgerät nach dem Stand der Technik für die Verbrennungsluft ergebenden Strömungsverhältnisse sind in Fig. 2 dargestellt. Die Verbrennungsluft tritt über den Einlass 23 in das Gehäuse 2 des Brennwert-Heizgeräts 1 ein, wie durch die Pfeile 42 dargestellt. Dann streicht sie auf dem Weg nach unten an den warmen inneren Komponenten (Heizkessel 12, Rohrleitungen, Pumpen, etc.) des Brennwert-Heizgeräts vorbei, wie beispielhaft durch die kleinen Pfeile 43 dargestellt. Dabei erwärmt sich die Verbrennungsluft 43, so dass auf eine Isolierung des Brennwert-Heizgeräts verzichtet werden kann und sich die Abstrahlverluste des Geräts in Grenzen halten. Die so vorgewärmte Verbrennungsluft tritt dann über eine Rückstromsperre 34 in das Zuluftrohr 40 ein, wie durch den Pfeil 44 angedeutet. Das Zuluftrohr 40 hat seine Öffnung im unteren Bereich 4 des Gehäuses 2, um möglichst viel Verlustwärme der inneren Komponenten des Brennwert-Heizgeräts aufzunehmen. Aufgrund der Ansaugung der Verbrennungsluft durch das Zuluftrohr 40 ergibt sich ein Druckverlust, der durch die Leistung des Ventilators 10 wieder ausgeglichen werden muss. Hinzu kommt, dass die Verbrennungsluft entgegen der Thermik von oben nach unten bewegt werden muss.

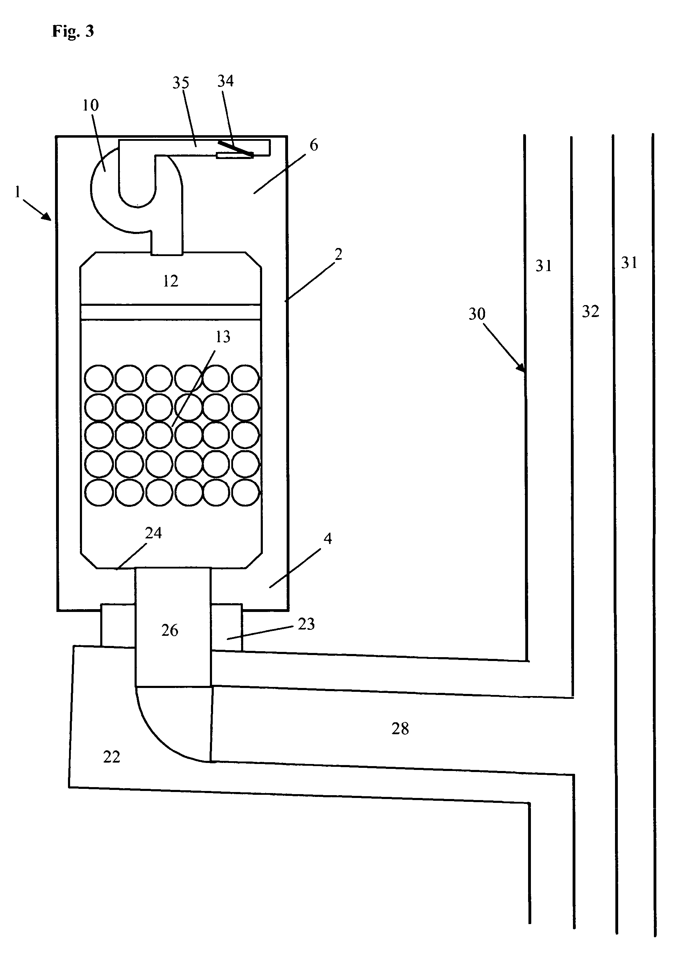

Diese Nachteile treten bei einem Brennwert-Heizgerät 1 gemäß der vorliegenden Erfindung nicht auf. Eine Ausführungsform eines erfindungsgemäßen Brennwert-Heizgerätes 1 ist in Fig. 3 dargestellt. Fig. 3 zeigt symbolisch ein Brennwert Heizgerät 1, das an einen Kamin 30 eines Gebäudes angeschlossen ist. Das Heizungssystem kann jedoch mehrere Brennwert-Heizgeräte 1 umfassen, beispielsweise auf mehreren Stockwerken, die alle an den dargestellten gemeinsamen Kamin 30 angeschlossen sind (Kaskadenanordnung).

Das Brennwert-Heizgerät 1 umfasst einen Ventilator 10 für die Zufuhr von Verbrennungsluft zu dem Heizkessel 12. In Fig. 3 ist der Ventilator stehend angeordnet gezeichnet. Selbstverständlich kann der Ventilator 10 auch liegend angeordnet sein, um weiteren Raum im Brennwert-Heizgerät 1 einzusparen. Im Heizkessel 12 wird Wasser für die Heizung bzw. Brauchwasser in einem Wärmetauscher 13 erwärmt. Dabei anfallendes Kondensat wird in einer Kondensatwanne 24 gesammelt. Die Kondensatwanne 24 ist bevorzugt symmetrisch ausgebildet und weist einen Auslass, bzw. Stutzen 26 auf, der zentrisch in der Kondensatwanne 24 angeordnet ist. Durch diesen Auslass 26, der nach unten aus den Gehäuse 2 des Brennwert-Heizgeräts heraus mündet, wird gleichzeitig sowohl Kondensat aus der Kondensatwanne 24 als auch die entstehenden Abgase abgeführt. Es versteht sich, dass je nach Gestaltung des Brennwert-Heizgeräts 1 der Auslass 26 aus dem unteren Bereich 4 des Gehäuses 2 nach unten, nach hinten oder zu einer Seite erfolgen kann.

An den Auslass 26 ist eine fallend angeordnete Rohrleitung 28 angeschlossen, die das Brennwert-Heizgerät mit einer Steigleitung 32 eines Kamins 30 verbindet. Über diese fallend angeordnete Rohrleitung 28 werden gleichzeitig das Abgas und das im Brennwert-Heizgerät 1 anfallende Kondensat zur Steigleitung 32 geleitet. Verbrennungsluft zu dem Brennwert-Heizgerät 1 wird durch einen Ringspalt 31 im Kamin 30 angesaugt und über einen Zuluftkanal 22 dem Brennwert-Heizgerät 1 zugeführt. Das erfindungsgemäße Brennwert-Heizgerät 1 kann daher grundsätzlich sowohl raumluftabhängig als auch raumluftunabhängig ausgeführt werden. Die Verbrennungsluft wird durch die Restwärme des Abgases in dem Kamin 30, der als Gegenstromwärmetauscher arbeitet, vorgewärmt.

Die Verbrennungsluft strömt durch einen Einlass 23 von unten in das luftdichte Gehäuse 2 ein. Da sowohl die Verbrennungsluft in den unteren Bereich 4 des Gehäuses 2 zugeführt wird, als auch die Abfuhr von Verbrennungsgasen und Kondensat durch den unteren Bereich 4 erfolgt, kann der obere Bereich 6 des Gehäuses 2 geschlossen ausgebildet sein. Die Verbrennungsluft strömt im Gehäuse 2 nach oben, wo sie von einem Ventilator 10 angesaugt wird und der Brennkammer 12 zugeführt wird. Zur Optimierung der Ansaugposition des Ventilators 10 kann dieser saugseitig mit einem Ansaugstutzen 35 verbunden sein, um die vorgewärmte Verbrennungsluft an geeigneter Stelle im oberen Bereich 6 des Gehäuses 2 anzusaugen.

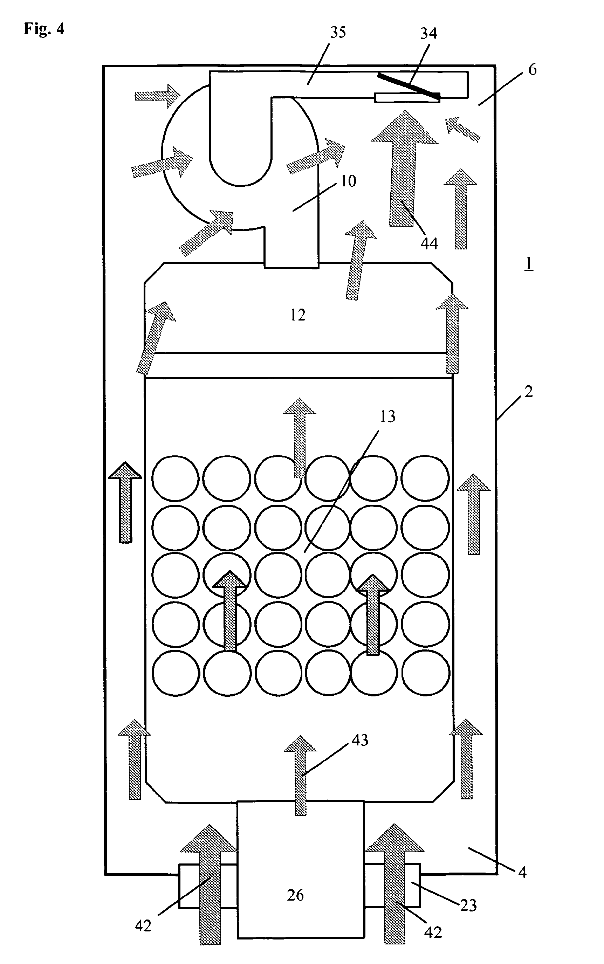

Wie man an den Figuren 3 und 4 erkennt, kann das Brennwert-Heizgerät 1 durch den Wegfall von interner Abgasführung 18 und Ansaugrohr 40 wesentlich kompakter gebaut werden. Da weniger Komponenten benötigt werden, verringern sich auch die Herstellkosten.

Wie in Fig. 4 durch die Pfeile 42 dargestellt, strömt die Verbrennungsluft von unten in das Gehäuse 2 durch einen Einlass 23 ein. Dann streicht sie auf dem Weg nach oben an den warmen inneren Komponenten (Heizkessel 12, Rohrleitungen, Pumpen, etc.) des Brennwert-Heizgeräts vorbei, wie beispielhaft durch die kleinen Pfeile 43 dargestellt. Dabei erwärmt sich die Verbrennungsluft 43, so dass auf eine Isolierung des Brennwert-Heizgeräts verzichtet werden kann und sich die Abstrahlverluste des Geräts in Grenzen halten. Die so vorgewärmte Verbrennungsluft tritt dann über eine Rückstromsperre 34 in eine kurzen Ansaugstutzen 35 ein, wie durch den Pfeil 44 angedeutet. Der Ansaugstutzen 35 hat seine Öffnung im oberen Bereich des Gehäuses 2, um möglichst viel Verlustwärme der inneren Komponenten des Brennwert-Heizgeräts aufzunehmen. Aufgrund der Ansaugung der Verbrennungsluft durch einen sehr kurzen Ansaugstutzen 35 ergibt sich ein wesentlich geringerer Druckverlust als bei der Ansaugung im Stand der Technik. Hinzu kommt, dass die Strömung der Verbrennungsluft von unten nach oben durch die Thermik unterstützt wird. Insgesamt kann daher der Ventilator 10 wesentlich kleiner ausgelegt werden, als im Stand der Technik oder es werden bei gleicher Leistung höhere Abgasdrücke erzielt.

Damit wird ein Verfahren zum Betrieb eines Brennwert-Heizgeräts 1 möglich, bei dem Verbrennungsluft in den unteren Teil 4 eines luftdichten Gehäuses 2 des Brennwert-Heizgeräts 1 eintritt (Pfeile 42), die Verbrennungsluft frei aufsteigt und sich an warmen Komponenten des Brennwert-Heizgeräts erwärmt (Pfeile 43), die erwärmte Verbrennungsluft im oberen Teil 6 des Gehäuses 2 angesaugt wird (Pfeil 44) und zur Brennkammer eines Heizkessels 12 zugeführt wird.

Um zu verhindern, dass bei einem abgeschalteten Brennwert-Heizgerät 1 Abgase von anderen Brennwert-Heizgeräten - beispielsweise aus anderen Stockwerken - sich mit der Verbrennungsluft vermischen, ist eine Rückstromsperre 34 vorgesehen. Sie verhindert, dass Abgase durch den Heizkessel 12 und durch den Ventilator 10 in das Gehäuse 2 des Brennwert-Heizgerätes 1 einströmen. Diese Rückstromsperre kann vor oder nach dem Ventilator 10 oder vor oder nach dem Ansaugstutzen 35 angebracht sein. Dargestellt ist eine Anordnung vor dem Ansaugstutzen 35. Die Rückstromsperre 34 ist bevorzugt als eine kleine Rückschlagmembran aus Silikon ausgeführt. Falls notwendig, kann eine zweite Rückstromsperre 34 hinter der ersten Rückstromsperre 34 angeordnet werden, um bei einem Defekt der Membran kein Abgas in die Verbrennungsluft einzuleiten. Bei raumluftunabhängigen Geräten ist ein Abgasaustritt aus dem Brennwert-Heizgerät 1 in den Aufstellraum jedoch auch bei einem Defekt der Membran ausgeschlossen, da das Gehäuse 2 samt Verbrennungsluftzufuhr luftdicht ausgeführt ist.

Zur Verhinderung von Ansaug- und Verbrennungsgeräuschen kann in den Ansaugstutzen 35 ein Schalldämpfer integriert sein. Alternativ kann ein Schalldämpfer auch vor den Ansaugstutzen 35 geschaltet werden.

Durch das Einblasen der Verbrennungsluft in den Heizkessel 12 über den Ventilator 10 und die dort stattfindende Verbrennung herrscht im Heizkessel 12 und in der daran dicht angeschlossenen Rohrleitung 28 sowie in der Steigleitung 32 des Kamins ein Überdruck an Abgasen. Auf Grund dieses Überdrucks ist es nicht notwendig, die Abgase über ein steigendes Rohr abzuführen. Ein thermischer Auftrieb wird nicht mehr benötigt. Die Abgase werden quasi durch den Ventilator 10 abwärts durch die Rohrleitung 28 in die Steigleitung 32 des Kamins 30 des Gebäudes gepumpt. Gleichzeitig läuft das anfallende Kondensat rein schwerkraftbedingt über die fallend angeordnete Rohrleitung in die Steigleitung 32 ab. Teure und wartungsanfällige Kondensatpumpen können somit vermieden werden. Gleichfalls ist es nicht notwenig im Brennwert-Heizgerät die Abgase aufwendig nach oben abzuführen. Das Brennwert-Heizgerät 1 kann daher kleiner oder, bei identischen Abmessungen, leistungsstärker ausgeführt werden.

Die Rohrleitung 28 weist bevorzugt ein Gefälle von 1° - 10°, noch bevorzugter von 2° - 5° und in einer speziellen Ausführungsform von 3° auf. Auf Grund dieses Gefälles kann sich kein Kondensat stauen. Dadurch ist es ebenfalls möglich, falls in einem Stockwerk kein Brennwert-Heizgerät 1 angeschlossen ist, die fallend angeordnete Rohrleitung 28 mit einem Deckel zu verschließen, wobei durch die fallende Anordnung sichergestellt ist, dass sich hier kein Kondensat ansammeln kann. Zusätzlich sollte auch der Zuluftkanal 22 verschlossen werden, damit die vorgewärmte Verbrennungsluft nicht unerwünscht ausströmt oder Raumluft angesaugt wird.

Durch die unterseitige Abgasführung ist das Brennwert-Heizgerät 1 sehr gut für den Kaminkehrer zugänglich. Eine Revisionsöffnung, die in der Rohrleitung 28 und dem Zuluftkanal 22 vorhanden ist, befindet sich in Arbeitshöhe und muss nicht mehr mit Leitern oder Stühlen erreicht werden. Dadurch erhöht sich die Servicefreundlichkeit und Kontrollarbeiten können in einer ergonomischen Höhe durchgeführt werden. Ebenfalls wird die Montage des Brennwert-Heizgerätes 1 an der Wand und der Anschluss an dem Kamin 30 erleichtert.

Grundsätzlich kann das Brennwert-Heizgerät 1 in jeder beliebigen Höhe an einer Wand befestigt werden. Durch den nach unten weisenden kombinierten Abgas- und Kondensatauslass, durch die bauartbedingte kleinere Baugröße und durch den fehlenden zusätzlichen Anschluss an das Abwassersystem lässt sich das Brennwert-Heizgerät 1 wesentlich besser in Möbelstücke integrieren als herkömmliche Brennwert-Heizgeräte. So ist auch ein Anschluss in Bodennähe möglich, wobei das Brennwert Heizgerät 1 beispielsweise auch in einen Unterschrank einer Küche neben einem Gasherd eingebaut werden kann.

Das Brennwert-Heizgerät 1 eignet sich insbesondere für eine Heizungsanlage, bei denen mehrere Brennwert-Heizgeräte (beispielsweise für jedes Stockwerk oder für jede Wohnung eines) an einem gemeinsamen Kamin 30 angeschlossen sind (Kaskadenanordnung). Dann wird das anfallende Kondensat aller Brennwert-Heizgeräte in die Steigleitung 32 eingeleitet und kann durch einen großen Siphon am Kaminsockel gefangen und der Neutralisation zugeführt werden. Dadurch, dass mehrere Brennwert-Heizgeräte ihr Kondensat in die Steigleitung 32 einleiten, verringert sich die Gefahr, dass der Siphon trocken fällt. Zusätzlich kann auch Regen und Schnee in die Steigleitung 32 eindringen und hilft dies ebenfalls zu vermeiden.

Das Brennwert-Heizgerät 1 an sich braucht keinen separaten Siphon für die Kondensatabführung. Ebenfalls wird keine Kondensatpumpe benötigt.

Durch die fallende Anordnung der Rohrleitung 28 kann zusätzlich Wasser, das in gewissen Situationen an einem Überdruckventil des Heizkreislaufs anfällt, abgeleitet werden. Bevorzugt wird hierzu das an dem Überdruckventil anfallende Wasser, in die Kondensatwanne eingeleitet und/oder über die fallende Rohrleitung 28 in die Steigleitung 32 des Kamins 30 abgeführt.

### Bezugszeichenliste:

- 1: Brennwert-Heizgerät
- 2: Gehäuse
- 4: unterer Bereich
- 6: oberer Bereich
- 10: Ventilator
- 12: Heizkessel
- 13: Wärmetauscher
- 14: Siphon
- 18: interne Abgasführung
- 20: Rohrleitung
- 22: Zuluftkanal
- 24: Kondensatwanne
- 26: Auslass
- 28: fallend angeordnete Rohrleitung
- 30: Kamin
- 31: Ringspalt
- 32: Steigleitung
- 34: Rückstromsperre
- 35: Ansaugstutzen
- 40: Zuluftrohr
- 42: Verbrennungsluft beim Eintritt in das Gehäuse
- 43: Verbrennungsluft beim Strömen durch das Gehäuse
- 44: Verbrennungsluft bei Ansaugung

## Patentansprüche

1. Brennwert-Heizgerät (1) aufweisend:
a) ein Gehäuse (2), welches in seinem oberen Bereich (6) geschlossen ist und welches in seinem unteren Bereich (4) einen Einlass (23) für Verbrennungsluft aufweist; und
b) einen Ventilator (10) zur Zufuhr von Verbrennungsluft zu einem Heizkessel (12);
c) der Ventilator (10) die Verbrennungsluft im oberen Bereich (6) des Gehäuses (2) ansaugt; und
d) das Gehäuse (2) in seinem unteren Bereich (4) einen gemeinsamen Auslass (26) für Abgase und anfallendes Kondensat aufweist;
**dadurch gekennzeichnet, dass**
e) das Brennwert-Heizgerät weiterhin eine Kondensatwanne (24) mit einem nach unten mündenden Stutzen (26) aufweist, wobei der Stutzen (26) gleichzeitig Auslass für anfallendes Kondensat als auch Auslass für Abgase aus dem Brennwert-Heizgerät (1) ist.

2. Brennwert-Heizgerät gemäß Anspruch 1, weiterhin aufweisend einen an den Ventilator (10) angebrachten Ansaugstutzen (35), wobei der Ansaugstutzen (35) dem Ventilator die Verbrennungsluft aus dem oberen Bereich (6) des Gehäuses (2) zuführt.

3. Brennwert-Heizgerät gemäß einem der Ansprüche 1 oder 2, weiterhin aufweisend mindestens eine Rückstromsperre (34) zur Verhinderung der Vermischung von Abgas und Verbrennungsluft bei abgeschaltetem Brennwert-Heizgerät (1).

4. Brennwert-Heizgerät gemäß Anspruch 3, wobei die Rückstromsperre (34) vor oder nach dem Ventilator (10) oder vor oder nach dem Ansaugstutzen (35) angeordnet ist.

5. Brennwert-Heizgerät gemäß einem der Ansprüche 2 - 4, wobei der Ansaugstutzen (35) weiterhin als Schalldämpfer ausgebildet ist.

6. Brennwert-Heizgerät gemäß einem der vorherigen Ansprüche, wobei die Verbrennungsluft von unten in das Gehäuse (2) eintritt, innerhalb des Gehäuses (2) erwärmt wird und als erwärmte Verbrennungsluft einer Brennkammer des Heizkessels (12) zugeführt wird.

7. Brennwert-Heizgerät gemäß Anspruch 1, weiterhin aufweisend eine fallend angeordnete Rohrleitung (28), die an den Stutzen (26) der Kondensatwanne (24) angeschlossen ist, für die gemeinsame Abgas- und Kondensatführung vom Brennwert-Heizgerät (1) zu einem Kamin (30) eines Gebäudes.

8. Verfahren zum Betrieb eines Brennwert-Heizgeräts (1), aufweisend die folgenden Schritte:
a) Eintreten von Verbrennungsluft in den unteren Bereich (4) eines luftdichten Gehäuses (2) des Brennwert-Heizgeräts (1);
b) Aufsteigen und Erwärmen der Verbrennungsluft an warmen Komponenten des Brennwert-Heizgeräts (1);
c) Ansaugen der erwärmten Verbrennungsluft im oberen Bereich (6) des Gehäuses (2); und
d) Zuführen der erwärmten Verbrennungsluft zur Brennkammer eines Heizkessels (12); **gekennzeichnet durch** den Schritt
e) des Abführens der Verbrennungsgase und des entstehenden Kondensats durch einen gemeinsamen Auslass (26) im unteren Bereich (4) des Gehäuses (2) des Brennwert-Heizgeräts (1) aus dem Gehäuse (2) heraus, wobei das Brennwert-Heizgerät weiterhin eine Kondensatwanne (24) mit einem nach unten mündenden Stutzen (26) aufweist, wobei der Stutzen (26) gleichzeitig Auslass für anfallendes Kondensat als auch Auslass für Abgase aus dem Brennwert-Heizgerät (1) ist.

9. Verfahren gemäß Anspruch 8, wobei das Zuführen der erwärmten Verbrennungsluft zur Brennkammer eines Heizkessels (12) mittels eines Ventilators (10) erfolgt.

10. Verfahren gemäß Anspruch 9, wobei das Ansaugen der erwärmten Verbrennungsluft zur Brennkammer eines Heizkessels (12) mittels eines an den Ventilator (10) angeschlossenen Ansaugstutzens (35) erfolgt.

## Claims

1. A condensing boiler (1), comprising:
a. a housing (2) which is closed in its upper region (6) and which comprises an inlet (23) in its lower region (4) for combustion air; and
b. a fan (10) for the supply of combustion air to a heating boiler (12); wherein
c. the fan (10) ingests the combustion air in the upper region (6) of the housing (2); and wherein
d. the housing (2) comprises a common outlet (26) in its lower region (4) for exhaust gases and occurring condensate, **characterized in that**
e. the condensing boiler further comprises a condensate tray (24) with a connection piece (26) which runs into lower end, wherein the connection piece (26) is simultaneously the outlet for occurring condensate, as well as outlet for the exhaust gases from the condensing boiler (1).

2. Condensing boiler according to claim 1, further comprising a suction support (35) which is mounted on the fan (10), wherein the suction support (35) supplies the combustion air from the upper region (6) of the housing (2) to the fan.

3. Condensing boiler according to claim 1 or 2, further comprising at least one backflow barrier (34) for preventing the mixture of the exhaust gases with the combustion air if the condensing boiler (1) is switched-off.

4. Condensing boiler according to claim 3, wherein the backflow barrier (34) is arranged before or after the fan (10) or before or after the suction support (35).

5. Condensing boiler according to one of the claims 2 - 4, wherein the suction support (35) is further arranged as silencer.

6. Condensing boiler according to any of the preceding claims, wherein the combustion air enters from below in the housing (2), is heated within the housing (2) and is supplied as heated combustion air to a combustion chamber of the heating boiler (12).

7. Condensing boiler according to claim 1, further comprising a pipeline (28), wherein the pipeline is arranged as falling, connected to the connection piece (26) of the condensate tray (24), for the common exhaust gases and condensate supply from the condensing boiler (1) to a chimney (30) of a building.

8. Method for operating a condensing boiler (1), comprising the following steps of:
a. Entering of combustion air in the lower region (4) of an airtight housing (2) of the condensing boiler (1);
b. Rising and heating of the combustion air at warm components of the condensing boiler (1);
c. Ingesting the heated combustion air in the upper region (6) of the housing (2); and
d. Supplying the heated combustion air to the combustion chamber of a heating boiler (12); **characterized in** the step of
e. Conducting the combustion gases and the resulting condensate through a common outlet (26) in the lower region (4) of the housing (2) of the condensing boiler (1) out of the housing (2), wherein the condensing boiler further comprises a condensate tray (24) with a connection piece (26) which runs into lower end, wherein the connection piece (26) is simultaneously the outlet for occurring condensate, as well as outlet for the exhaust gases from the condensing boiler (1).

9. Method according claim 8, wherein supplying the heated combustion air to the combustion chamber of the heating boiler (12) is carried out with a fan (10).

10. Method according to claim 9, wherein ingesting the heated combustion air to the combustion chamber of the heating boiler (12) via a suction support (35) which is mounted to a fan (10).

## Revendications

1. Appareil de chauffage à condensation (1) comportant :
a) un boîtier (2) qui est fermé dans sa zone supérieure (6) et qui présente dans sa zone inférieure (4) une entrée (23) pour l'air de combustion ; et
b) un ventilateur (10) d'alimentation en air de combustion vers une chaudière (12) ;
c) le ventilateur (10) aspirant l'air de combustion dans la zone supérieure (6) du boîtier (2),
d) le boîtier (2) comportant dans sa zone inférieure (4) une sortie commune (26) pour les fumées et pour les condensats qui en résultent ;
**caractérisé en ce que**
e) l'appareil de chauffage à condensation comprend en outre un bac à condensats (24) pourvu d'un manchon (26) débouchant vers le bas, le manchon (26) étant simultanément la sortie pour les condensats et la sortie pour les fumées hors de l'appareil de chauffage à condensation (1).

2. Appareil de chauffage à condensation selon la revendication 1, comprenant en outre un manchon d'aspiration (35) agencé sur le ventilateur, le manchon d'aspiration (35) acheminant l'air de combustion depuis la zone supérieure (6) du boîtier (2) vers le ventilateur.

3. Appareil de chauffage à condensation selon l'une des revendications 1 ou 2, comprenant en outre au moins un dispositif de blocage anti-retour (34) pour empêcher un mélangeage de fumées et d'air de combustion lorsque l'appareil de chauffage à condensation (1) est mis à l'arrêt.

4. Appareil de chauffage à condensation selon la revendication 3, dans lequel le dispositif de blocage anti-retour (34) est agencé en amont ou en aval du ventilateur (10) ou en amont ou en aval du manchon d'aspiration (35).

5. Appareil de chauffage à condensation selon l'une des revendications 2 à 4, dans lequel le manchon d'aspiration (35) est en outre réalisé sous forme d'amortisseur de bruits.

6. Appareil de chauffage à condensation selon l'une des revendications précédentes, dans lequel l'air de combustion rentre depuis le bas dans le boîtier (2), il est chauffé à l'intérieur du boîtier (2) et il est amené en tant qu'air de combustion chauffé à une chambre de combustion de la chaudière (12).

7. Appareil de chauffage à condensation selon la revendication 1, comprenant en outre une tuyauterie (28) agencée en descente et branchée au manchon (26) du bac à condensats (24) pour la conduite commune des fumées et des condensats depuis l'appareil de chauffage à condensation (1) jusqu'à une cheminée (30) d'un bâtiment.

8. Procédé pour faire fonctionner un appareil de chauffage à condensation (1), présentant les étapes suivantes :
a) l'introduction d'air de combustion dans la zone inférieure (4) d'un boîtier (2) étanche à l'air de l'appareil de chauffage à condensation (1) ;
b) la montée et l'échauffement de l'air de combustion le long des composants chauds de l'appareil de chauffage à condensation (1) ;
c) l'aspiration de l'air de combustion chauffé dans la zone supérieure (6) du boîtier (2) ; et
d) l'acheminement de l'air de combustion chauffé vers la chambre de combustion d'une chaudière (12 ; **caractérisé par** l'étape
e) l'évacuation des gaz de combustion et des condensats formés à travers une sortie commune (26) dans la zone inférieure (4) du boîtier (2) de l'appareil de chauffage à condensation, l'appareil de chauffage à condensation comprenant en outre un bac à condensats (4) pourvu d'un manchon (26) débouchant vers le bas, le manchon (26) étant simultanément la sortie pour les condensats qui en résultent et la sortie pour les fumées hors de l'appareil de chauffage à condensation (1).

9. Procédé selon la revendication 8, dans lequel l'acheminement de l'air de combustion chauffé vers la chambre de combustion d'une chaudière (12) s'effectue au moyen d'un ventilateur (10).

10. Procédé selon la revendication 11, dans lequel l'aspiration de l'air de combustion chauffé vers la chambre de combustion d'une chaudière (12) s'effectue au moyen d'un manchon d'aspiration (35) branché au ventilateur (10).
